# EUROPEAN PATENT APPLICATION

(11) **EP 4 768 816 A1**
(43) Date of publication of application: **01.07.2026**
(21) Application number: 25216681.4
(22) Date of filing: 18.11.2025
(51) Int. Cl.: F24H 3/04, F24H 9/00

(54) **PORTABLE TURBINE HEATER**

(30) Priority: 18.11.2024 US 202463721993 P; 14.11.2025 US 202519389420
(71) Applicant: Cahill Services Operating LLC, New Iberia, Louisiana 70560-6300 (US)
(72) Inventor: TRACHT, Steven Lee, 48118 Chelsea, MI (US); MCINTIRE, Nathan Wesley, 48154 Livonia, MI (US); BERNHARDT, Jack Robert, 48025 Bingham Farms, MI (US); MACDONALD, Daniel Bradley MacDonald, N8S 2G7 Windsor, ON (US)
(74) Representative: Schlich

(57) **Abstract**

A portable heating unit produces substantially breathable heated air due to burn efficiency. Fuel consumption is lower than known heating units. The heating unit may be powered by a variety of fuels, including diesel, propane, or other liquid or gaseous fuels. The heating unit operates independent of external power source by having a fuel tank, a power generator, and batteries. Following a brief warm-up time, the unit ramps up to full speed in less time than known technologies. The incoming air is compressed by a compressor and is forced into a combustor assembly which includes a swirling unit. The combustor provides pre-heating of the fuel while creating turbulence in the incoming air. Where diesel fuel is used, this arrangement increases atomization while creating better fuel-air mixing. The combustor is attached to a turbine which is attached to an exhaust catalyst. The catalyst is attached to a hot air ejector.

## Description

### CROSS REFERENCE TO RELATED APPLICATION

This application follows a U.S. Non-provisional Patent Application of U.S. Provisional Patent Application No. 63/721,993 entitled "PORTABLE GAS TURBINE HEATER," filed November 18, 2024.

### TECHNICAL FIELD

The present disclosure relates generally to portable heaters for use in various industrial, manufacturing, and/or construction settings. More particularly, the present disclosure provides an efficient and/or portable turbine heater having an (improved) combustor which can provide pre-heating of the fuel and/or turbulent incoming air. This may increase atomization and/or encouraging better fuel-air mixing. The disclosed portable turbine heater is provided in two embodiments in which in one embodiment the heater is powered by diesel fuel and in another embodiment the heater is powered by propane.

### BACKGROUND OF THE INVENTION

Portable heating units have been used for many years to heat spaces which are typically large, and which do not have their own HVAC system such as for industrial climate control or which are under construction and have not yet had an HVAC system installed. In addition to the general purpose of heating large spaces, portable heating units are often used in de-icing, ground thawing, heating wells, pipeline thermal expansion, and equipment and pipe thawing. Portability of the heating units is also valuable in the construction of tall buildings. The efficient curing of cement allows workers to move from floor to floor as the cement floors are cured.

Known systems typically rely on gaseous fuels, liquid gas fuels, diesel fuels, or a fixed electrical power source. The typical portable heater has certain inefficiencies in part due to the restricted choice but also due in part to the complicated designs of known systems. As a result, known portable heating units tend to use fuel inefficiently in operation, have a relatively high output of pollutants which creates challenges when heating a closed environment, and can be expensive to maintain in large part due to their excessively complicated designs. This can be problematic.

Accordingly, a need exists to provide a portable heating unit that is efficient in both operation and service, and which can produce a low(er) number and/or amount of pollutants.

### SUMMARY OF THE INVENTION

The disclosed inventive concept provides a solution to the need for an improved portable heating unit. The heating unit of the present invention may be powered by a variety of fuels, including diesel, propane, and/or other liquid or gaseous fuels. The operating arrangement of the heating unit can provide a distinct advantage over known systems in that it may operate independent of external power sources, such as by carrying (on board) a fuel tank, often as well as a power generator, and/or one or more rechargeable batteries. The present invention can thus provide a lightweight and/or portable heating unit which may produce substantially breathable heated air, usually due to the high burn efficiency of the unit, which may be better than 97%, suitably even under the most extreme operating conditions. Following a brief warm-up time, the disclosed unit may ramp up to full speed in less time than known technologies which may take upwards of several minutes to reach operating temperature. Fuel consumption may be dramatically reduced, and may thus provide considerable operating cost savings to the operator. Low fuel consumption also contributes to less CO2 generation, and/or the exhaust catalyst system sufficiently reduces CO parts per million (PPM) values to below the OSHA and NIOASH upper limits for workspaces. The lower weight of the unit compared with known units may allow for a high level of portability while minimizing towing concerns.

These advantages are possible due to the use of micro turbine technology which may operate with only a minimum of maintenance and/or a novel starting arrangement which may rely on brushless starter and/or generating DC (BLDC) motors, suitably disposed in a dual parallel cold air inlet system - in communication with a box filter. The brushless starter motor is disposed in one inlet while the brushless generating motor is disposed in the other inlet. Once the unit is started by the brushless starter, the brushless generating motor generates electrical power to sustain operation of the unit, suitably without the need for additional power input. The airflow between inlets is suitably algorithmically controlled, as this may optimize starting and power generation, two functions which may not be concurrent. The filter can minimize the risk of dust and/or debris entering the system (at the worksite).

The incoming air is usually compressed by a compressor. The compressed air is forced into a combustor assembly - this may includes a swirling unit, suitably fitted to a combustor. The combustor can provide pre-heating of the fuel, suitably while creating turbulence in the incoming air. In the case of diesel fuel operation, this arrangement increases atomization, while creating better fuel-air mixing.

The combustor assembly can be attached to a turbine which is attached to an exhaust catalyst. The exhaust catalyst is fitted to an ejector - this may operate without the need for a fan (or other complicated mechanical support system), suitably while (efficiently) providing dilution air. Given the several advanced design features of the disclosed heating unit, heated air can be delivered great distances which may be up to 500 feet away or farther, and this may allow the operator to split the outputted air into several feeds.

The above advantages and other advantages and features will be readily apparent from the following detailed description of the preferred embodiments when taken in connection with the accompanying drawings.

### BRIEF DESCRIPTION OF THE DRAWINGS

For a more complete understanding of this invention, reference should now be made to the embodiments illustrated in greater detail in the accompanying drawings and described below by way of examples of the invention wherein:
FIG. 1 is a first side view of the portable turbine heater according to the disclosed inventive system;
FIG. 2 is a second side view of the portable turbine heater according to the disclosed inventive system;
FIG. 3 is a first end view of the portable turbine heater according to the disclosed inventive system;
FIG. 4 is a second end view of the portable turbine heater according to the disclosed inventive system;
FIG. 5 is a first perspective view of the portable turbine heater according to the disclosed inventive system;
FIG. 6 is a second perspective view of the portable turbine heater according to the disclosed inventive system;
FIG. 7 is a perspective view of the dual parallel cold air inlet system in conjunction with a box filter of the disclosed inventive system partially shown in gray scale;
FIG. 8 is a sectional view of the dual parallel cold air inlet system;
FIG. 9 is a side view primarily of the of the turbine, bearing housing, and compressor unit;
FIG. 10 is a sectional view of the turbine, bearing housing, and compressor unit shown in FIG. 9;
FIG. 11 is a side view of the diesel embodiment of the combustor assembly shown in partial section;
FIG. 12 is a perspective view of the diesel embodiment of the combustor assembly shown in partial section;
FIG. 13 is an exploded view of the diesel embodiment of the combustor assembly;
FIG. 14. is an exploded view of the swirling element of the diesel embodiment of the combustor assembly;
FIG. 15 is a side view of the propane embodiment of the combustor assembly shown in partial section;
FIG. 16 is a perspective view of the propane embodiment of the combustor assembly shown in partial section;
FIG. 17 is an exploded view of the propane embodiment of the combustor assembly; and
FIG. 18. is an exploded view of the swirling element of the propane embodiment of the combustor assembly.

### DETAILED DESCRIPTION OF THE PREFERRED EMBODIMENT

In the following figures, the same reference numerals will be used to refer to the same components. In the following description, various operating parameters and components are described for different constructed embodiments. These specific parameters and components are included as examples and are not meant to be limiting.

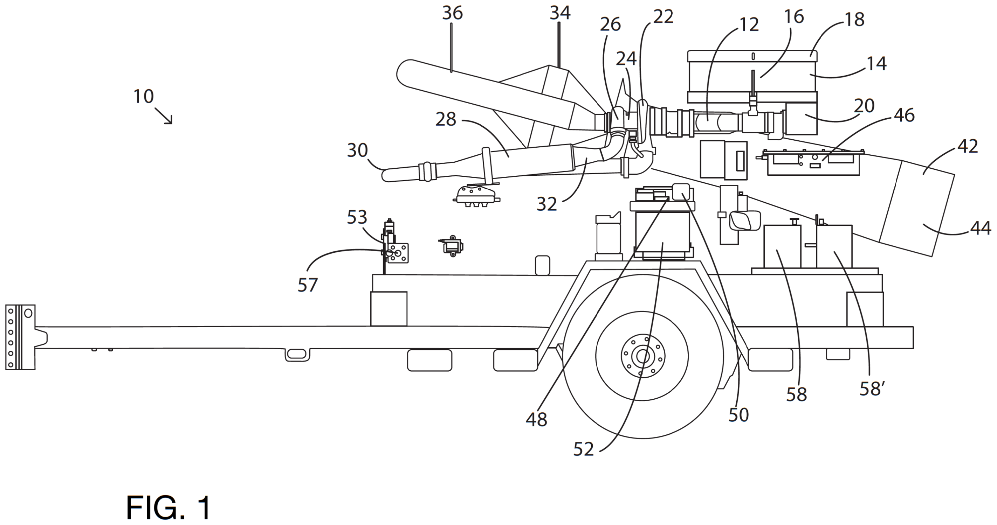

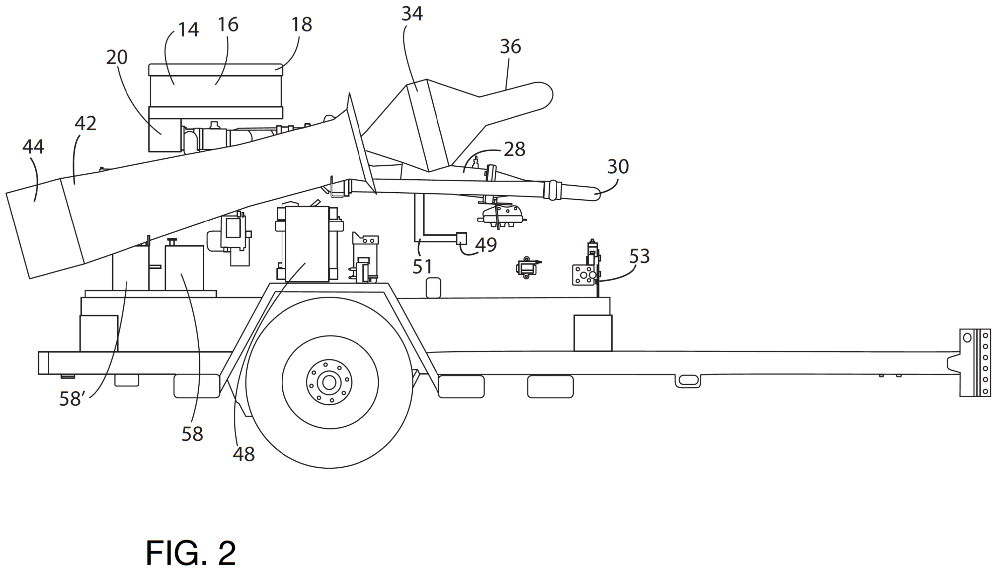

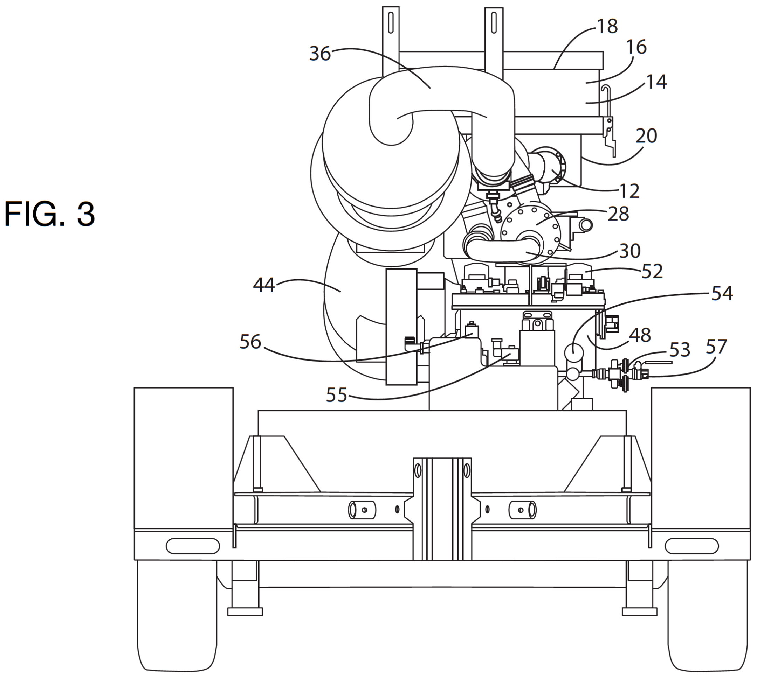

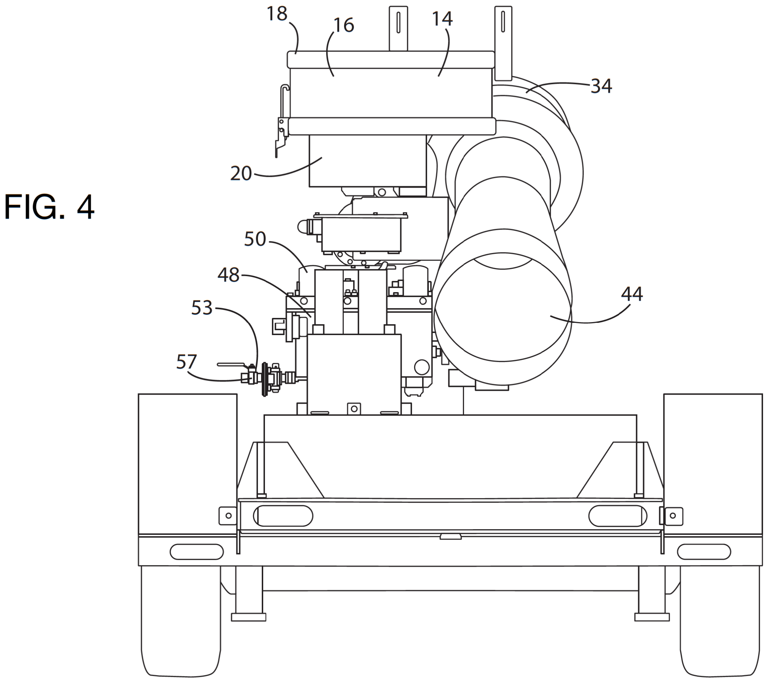

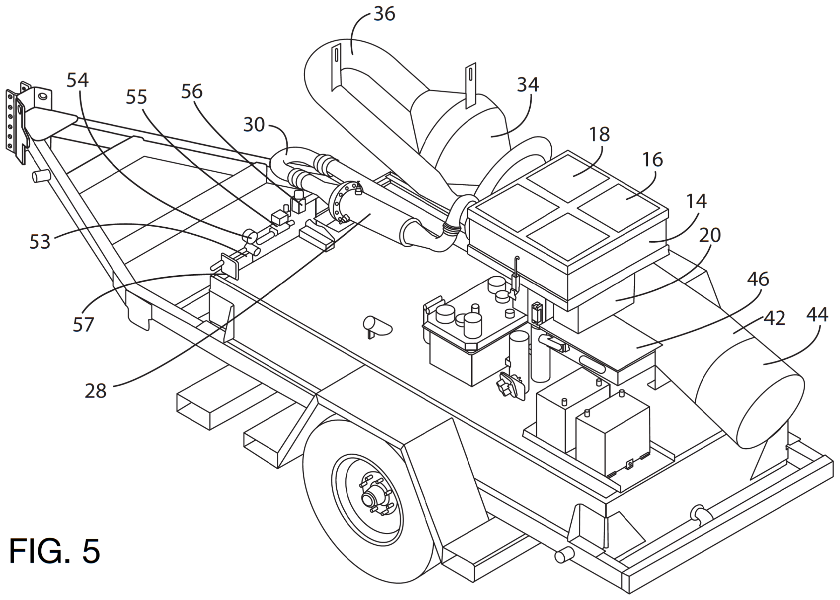

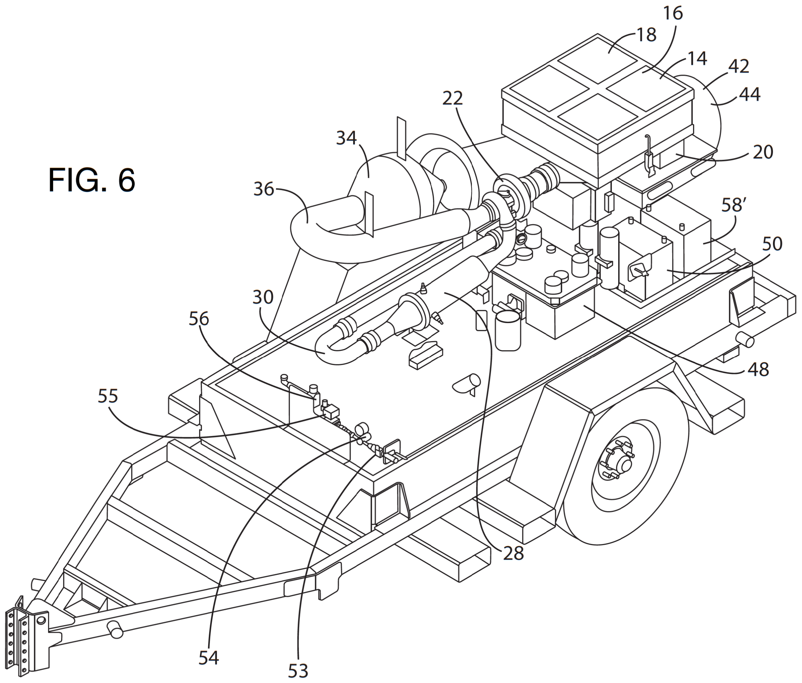

Referring to FIGS. 1 - 6, a portable turbine heater assembly is illustrated in various views and is generally shown as 10. It is to be understood that the overall shapes, configurations, and placements of the components which comprise the portable turbine heater assembly 10 as illustrated are suggestive and are not intended as being limiting as variations may be possible without deviating from the inventive features of the present invention.

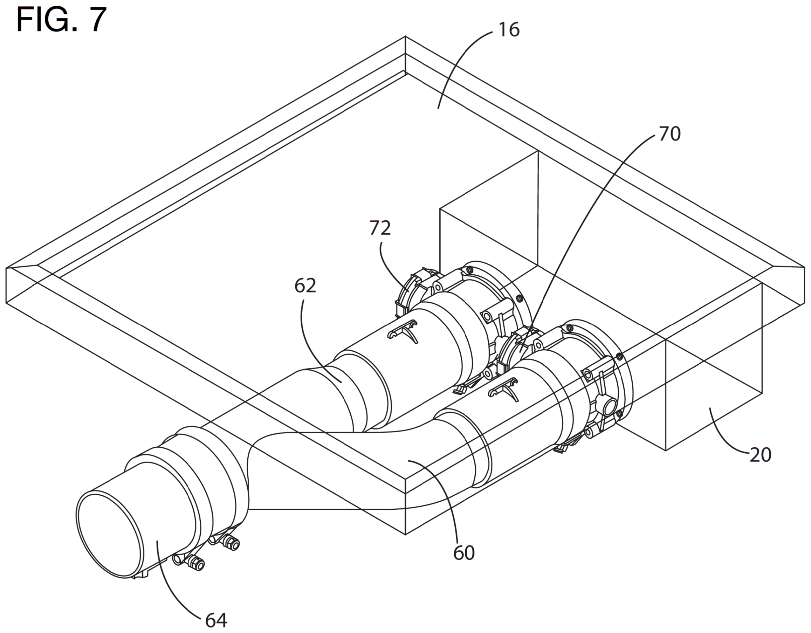

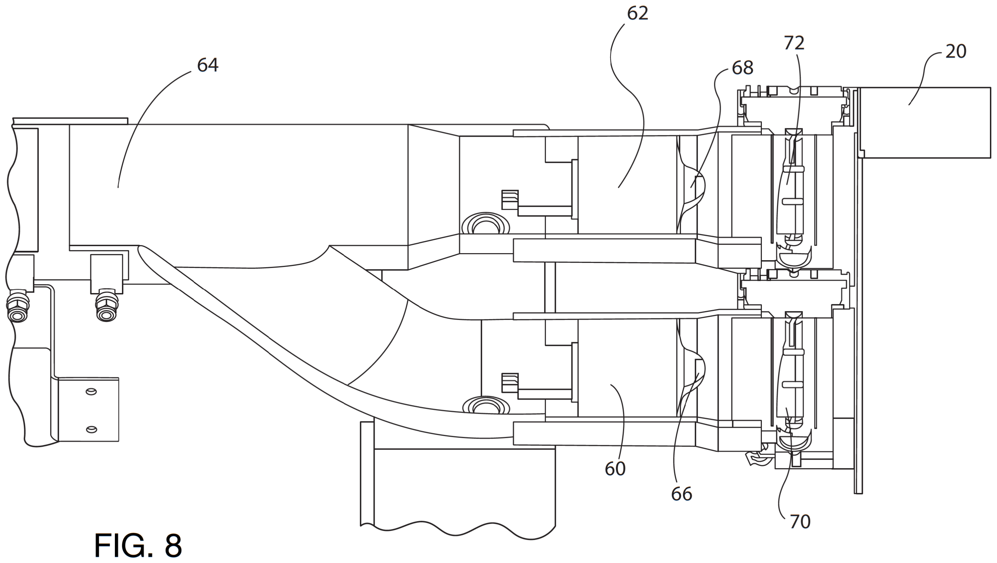

The portable turbine heater assembly 10 includes a cold air inlet assembly 12 described in detail in relation to FIGS. 7 and 8 and an associated air filter assembly 14 comprising a replaceable air filter 16 substantially over which is fitted an air filter clamp plate 18. The filter clamp plate 18 securely holds the replaceable air filter 16 and creates a tight seal around the air filter 16. At its lower end is provided a plenum/supporting housing 20 which is fluidly associated with the cold air inlet assembly 12 which is itself fluidly associated with a compressor 22.

Adjacent to and connected with the compressor 22 is a bearing assembly 24. The bearing assembly 24 is attached to a turbine 26. The cold air inlet assembly 12 is connected to the compressor 22. A combustor assembly 28 is fluidly connected to the compressor 22 by a compressor outlet pipe 30. A combustor assembly outlet pipe 32 delivers heated air under pressure to the turbine 26 which is fluidly connected to a catalytic converter 34 by a hot air pipe 36. The catalytic converter 34 includes an exhaust end 38 which is spaced apart from an inlet end 40 of an ejector 42. The ejector 42 includes an exhaust end 44 out of which hot air is ejected.

General operation of the portable turbine heater assembly 10 includes the following steps. Initially, cold ambient air is drawn into the air inlet assembly 12 after being filtered by the air filter assembly 14. The compressor 22 compresses the filtered cold ambient air and delivers it under pressure to the combustor assembly 28 by way of the combustor assembly inlet pipe 30. After being heated in the combustor assembly 28, the heated air is delivered under pressure to the turbine 26 and then to the catalyst 34 by way of the hot air pipe 36 and is exhausted into the ejector 44. The turbine 26 is driven by the expanding combustion gases coming out of the combustor assembly 28. As discussed below, the compressor 22 is connected through the bearing assembly 24 to the turbine 26. With the hot gases driving the turbine 26, the compressor 22 also spins and acts as a fresh air pump, forcing air into the combustor assembly 28 above atmospheric pressures, providing fresh air to sustain the combustion.

A programmable controller 46 is provided to regulate operation of the portable turbine heater assembly 10. Lubrication of the bearing assembly 28 is provided by a lubricator 48. One or more oil filters 50 may be provided for filtering the oil. In the diesel variant of the present invention, diesel fuel may be provided in a diesel fuel priming tank 52. The priming tank 52 functions to prime the combustor assembly 28. A conventional diesel fuel storage tank is provided in the diesel variant of the present invention.

In the propane-fueled variant of the present invention, a propane regulator stack-up 53 is provided. The regulator stack-up 53 is attached to an external source of propane fuel (not shown) by way of a suitable arrangement to the inlet end of the propane regulator system 54. The propane regulator stack-up 53 includes a manual ball valve 57, a propane regulator 54, an electronically controlled on/off gas solenoid 55 which is normally in its closed position, and an electronically controlled stepper motor controller and needle valve 56 for adjusting fuel flow. The normally closed on/off gas solenoid 55 is provided for fail-safe operation of the heater assembly 10. The outlet end of the propane regulator stack-up 53 is attached to the combustor assembly 28. For the diesel fuel embodiment of the portable turbine heater assembly 10, a fuel controller is used to regular fuel flow.

Power for the portable turbine heater assembly 10 may be from any of a variety of sources, but a preferred arrangement is to include onboard rechargeable batteries 58, 58' for operation. However, once started, the portable turbine heater assembly 10 provides its own power through an internal power generating arrangement as discussed below.

As noted above, the cold air inlet assembly 12 and the associated air filter assembly 14 are illustrated in FIGS. 7 and 8. With reference thereto, the cold air inlet assembly 12 includes two parallel air inlets including an offset air path 60 and a straight-through primary air path 62. The offset air path 60 and the primary air path 62 converge into a single cold air transfer pipe 64 which is fluidly connected to the compressor 22 by a compressor inlet 74.

The offset air path 60 includes a starter fan/BLDC motor 66 used to initiate air flow into the portable turbine heater assembly 10. Once running, the offset path 60 containing the starter fan/BLDC motor 66 is used as a bypass to provide additional air for combustion, moderate the generator's rotational speed, or improve charging efficiency of the system.

The primary air path 62 includes a generator 68 which is preferably though not absolutely a BLDC motor. Cold air is drawn into the primary air path 62 and spins the generator 68 thus providing power to the charging circuit to sustain continuing operation of the portable turbine heater assembly 10. The generator 68 can also be an AC or brushed DC generator. For a BLDC or AC generator, a rectifier circuit (not shown) is required to convert the voltage to a DC signal. The DC signal must be regulated using a DC-to-DC boost/buck charging circuit to either boost (increase) or buck (decrease) the voltage to the correct charging value.

The offset air path 60 includes a throttle body 70 and the primary air path 62 includes a throttle body 72. Both throttle bodies 70 and 72 function to regulate the volume of incoming air into their respective paths.

As illustrated in FIGS. 7 and 8, the offset air path 60 and the primary air path 62 are in fluid communication with the plenum 20 of the air filter assembly 14. This arrangement ensures that only clean air is allowed to enter the portable turbine heater assembly 10.

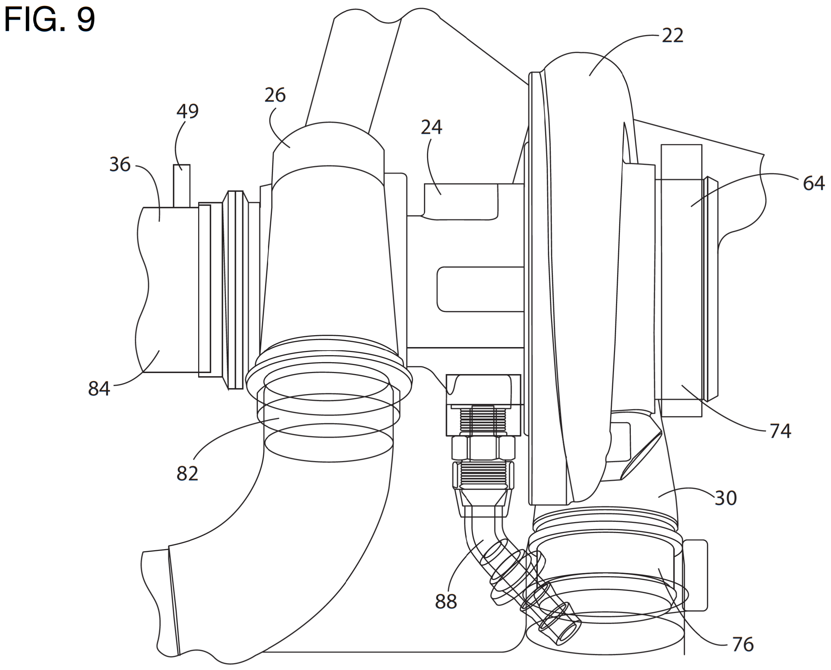

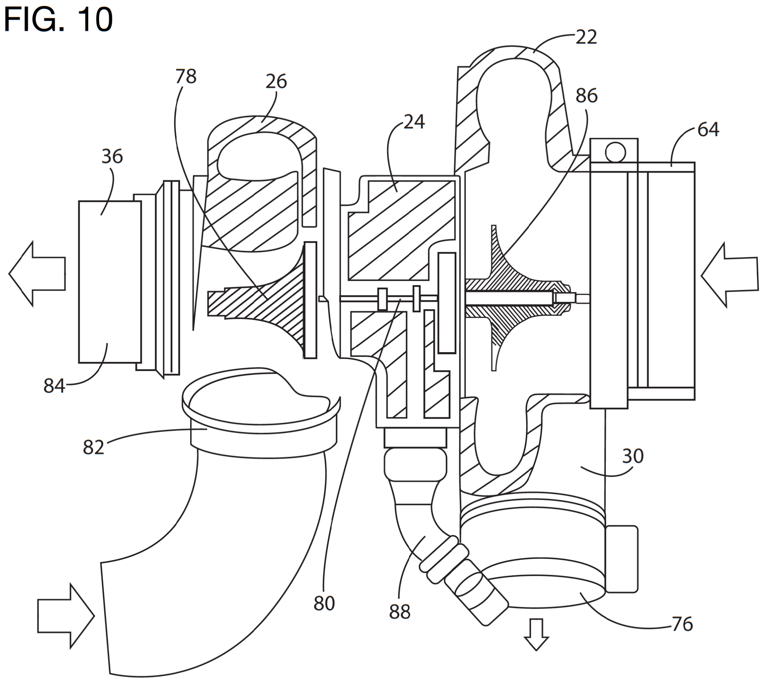

Referring to FIGS. 9 and 10, the compressor 22, the bearing assembly 24, and the turbine 26 are illustrated with these components being shown in cross section in FIG. 10. The compressor 22 further includes a compressed air outlet 76 to which the combustor assembly inlet pipe 30 is attached. The turbine 26 includes a turbine wheel 78. A rotor shaft 80 extends through the bearing assembly 24. The compressor wheel 78 is affixed to one end of the rotor shaft 80. The turbine wheel 78 is preferably composed of an alloy consisting of nickel [about 25%] and chromium [about 15%] such as an Inconel^{®} alloy, a superalloy which demonstrates high resistance to corrosion, oxidation, carburization, and pitting. Accordingly, the turbine 26 is capable of withstanding elevated heat greater than 800°C.

The turbine 26 includes an air inlet 82 which is attached to the outlet end of the combustor 28. The turbine 26 includes an air outlet 84 which is attached to the hot air pipe 36. The compressor 22 includes a turbine wheel 86 which is attached to one end of the rotor shaft 80.

**The** bearing assembly 24 is attached to the lubricator 48 by an oil delivery line (not shown). An oil drain line 88 is attached to the lubricator 48 to return lubricating oil to the lubricator 48. A programmable controller 46 is provided to regulate operation of the portable turbine heater assembly 10.

Pressure sensors are fitted in strategic locations on the portable turbine heater assembly 10. A first pressure sensor 47 is associated with the combustor assembly inlet pipe 30 and senses the pressure of heated air as it exits the compressor 22 while a second sensor 49 is associated with the air outlet 84 by way of a standoff 51 and senses pressure of the airflow as it exits the turbine 26 on its way to the hot air pipe 36. The standoff 51 is necessary so the heat exiting the turbine 26 does not damage the sensor 49. The pressure sensors 47 and 49 are provided to monitor the correctness of the pressure ratio between the two sections of the portable turbine heater assembly 10.

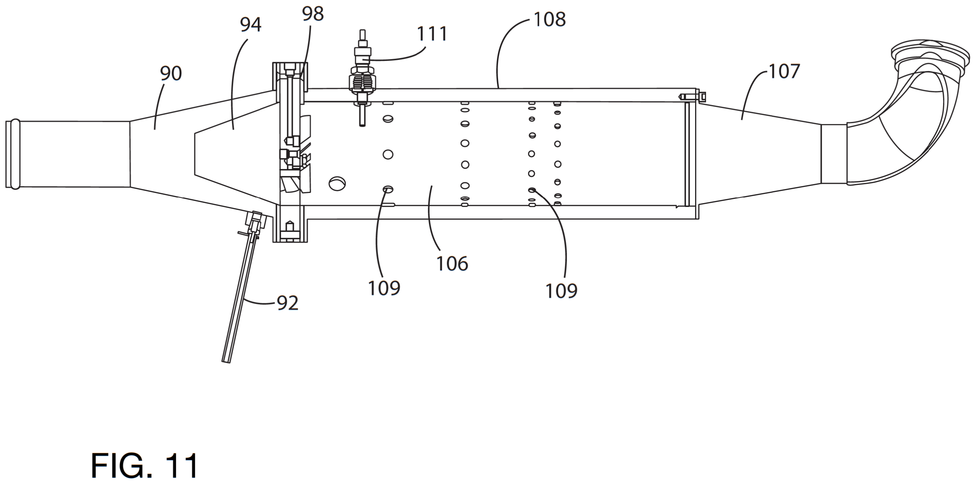

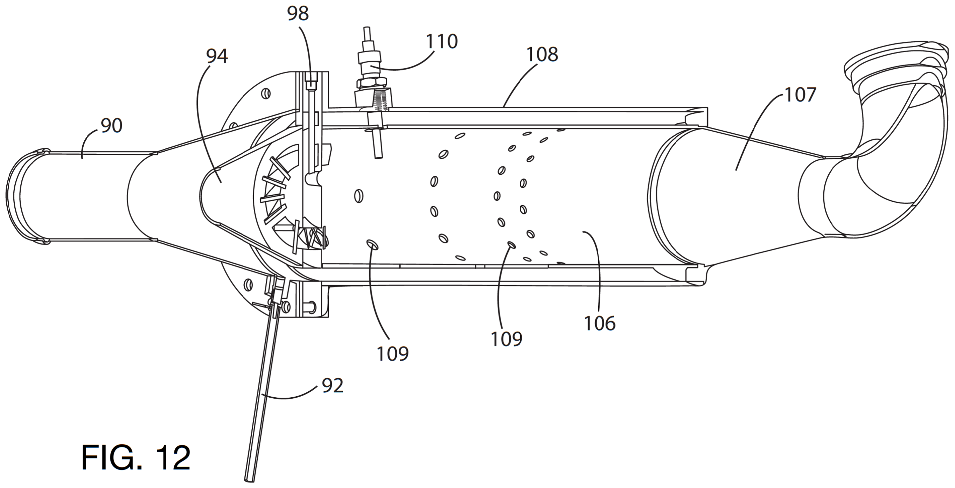

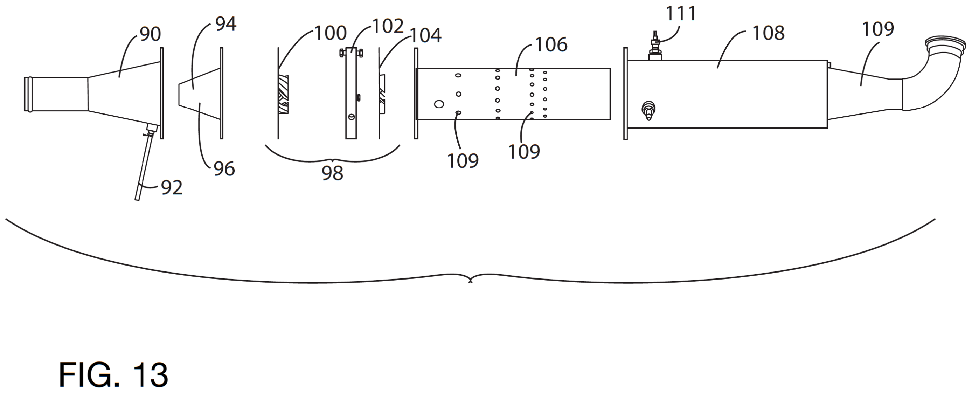

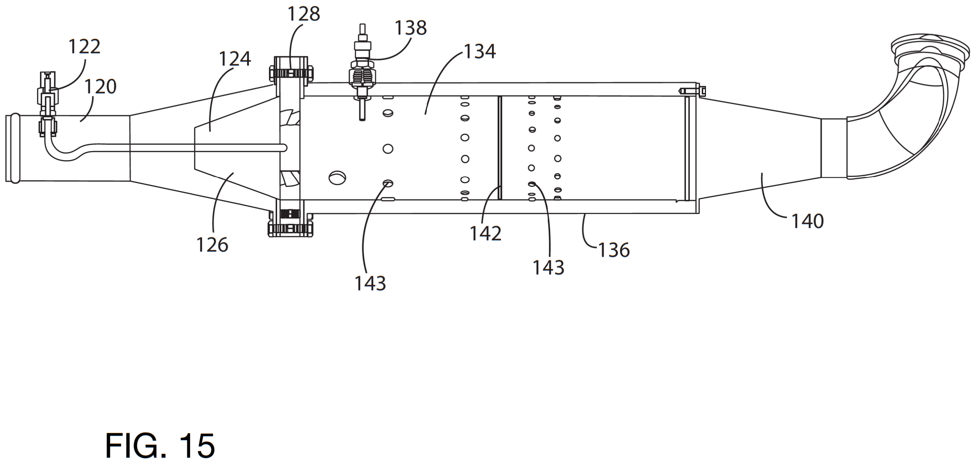

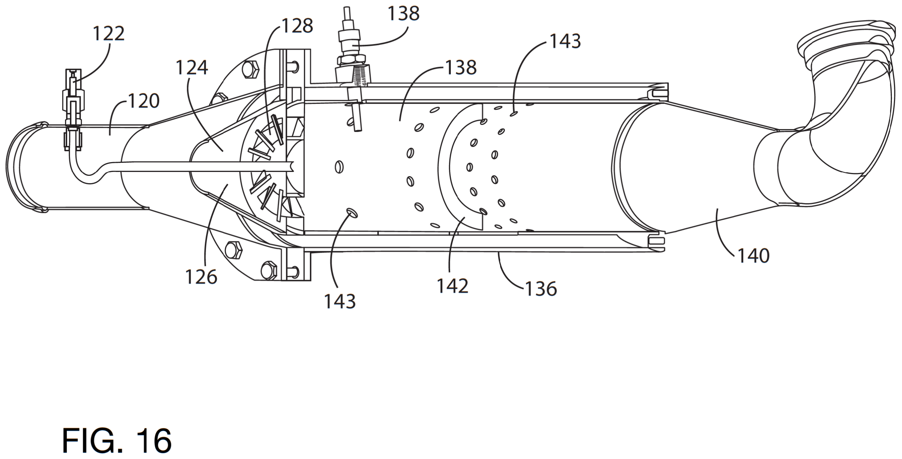

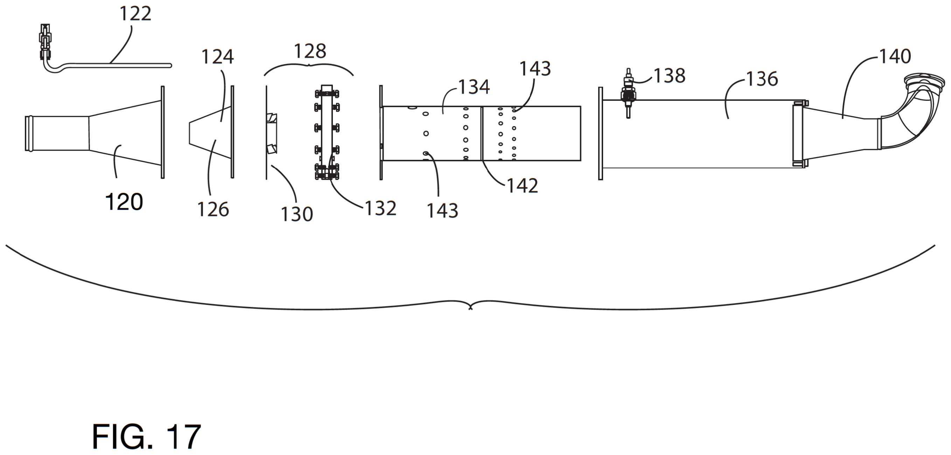

As noted above, the disclosed portable turbine heater assembly 10 may operate on a number of fuel types, including but not limited to diesel, propane, and compressed natural gas (CNG). Given the different properties of these fuels, particularly diesel and propane, slight variations between combustor designs are necessary to allow proper operation. Accordingly, FIGS. 11 - 14 illustrate the combustor diesel fuel embodiment of the portable turbine heater assembly 10 while FIGS. 15 - 18 illustrate the propane embodiment of the portable turbine heater assembly 10.

Referring to FIGS. 11 - 14, the combustor 28 includes a diffuser 90 to which is attached a diesel fuel drain 92 for draining accumulated diesel fuel before it is inadvertently burned. An air diverter 94 includes a conical structure 96 which substantially nests within the diffuser 90.

Adjacent the air diverter 94 is an air-fuel swirling element assembly 98 which includes individual bladed components. The air-fuel swirling element assembly 98 includes a primary swirler 100, a nozzle housing 102, and a secondary swirler 104.

An elongated tubular flame liner 106 is fitted within an elongated combustor casing 108 to which an ignition source is attached. The ignition source may either be a glow plug 111 where the portable turbine heater assembly 10 operates on diesel fuel or a spark plug 138 (illustrated in FIG. 15 and discussed below) where the portable turbine heater assembly 10 operates on a gas such as propane. Attached to the combustor casing 108 is a conical exit collector 107. A plurality of strategically placed holes 109 of different diameters are formed within the tubular flame liner 106. A space is provided between the inner wall of the combustor casing 108 and the flame liner 106. The diverter 94 operates to direct additional combustion air into the space between the inner wall of the combustor casing 108 and the flame liner 106. The air and fuel are mixed in the primary zone of the flame liner. The air-fuel mixture passes through the flame liner and, due to the size variations of the holes formed in the tubular flame liner 106, allows additional combustion air to enter the interior space of the combustor 28 in a controlled way. The larger primary holes are the primary holes where most of the incoming fuel is burned. The smaller secondary and tertiary holes allow for complete burn of any fuel not previously burned.

In operation, air and fuel are mixed within the elongated tubular flame liner 106 at the nozzle housing 102. Additional air is introduced through the flame liner holes 109. The diverter 94 sends a majority of the compressed air into the volume between the flame liner 106 and the combustor casing 108 to be introduced to combustion via the flame liner holes 109.

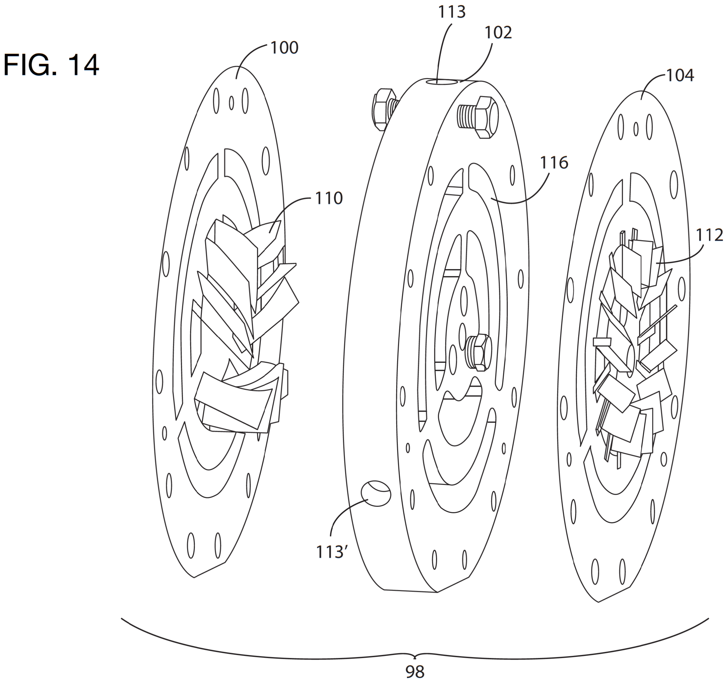

As illustrated particularly in FIG. 14, the primary swirler 100 includes fixed and centrally located swirler blades 110. The secondary swirler 104 includes fixed and centrally located swirler blades 112. The number, length, and pitch of the swirler blades 110 and 112 may be adjusted prior to assembly to achieve optimum swirling effect.

The nozzle housing 102 includes fuel inlets 113 and 113'with a third port possibly present on the opposite side. One or more of the fuel inlets 113 or 113' may be used for receiving diesel fuel. The nozzle housing 102 further includes a bypass airflow path 116 which allows air to enter the space between the combustor 108 and the flame liner 106.. The blades 110 of the primary swirler 100 cause the incoming air to swirl as it passes into and through the concentric air distributing rings 116. The air is caused to swirl faster when passing through the blades 112 of the secondary swirler 104. The swirling effect creates turbulence in the airstream thereby increasing atomization while creating better fuel-air mixing prior to the mixture being burned.

The propane-powered variant of the combustor 28 is illustrated in FIGS. 15 - 18. With reference thereto, the combustor 28 includes a diffuser 120 to which is attached a propane fuel line 122. An air diverter 124 includes a conical structure 126 which substantially nests within the diffuser 120.

Adjacent the air diverter 124 is a fuel swirling element assembly 128 which includes a swirler 130 and a swirler support housing 132. The swirler support housing 132 includes a concentric, air-fuel passing ring 133.

An elongated tubular flame liner 134 is fitted within an elongated combustor casing 136 to which the spark plug 138 is attached. Attached to the combustor casing 136 is a conical exit collector 140. A flame retaining ring 142 is welded in position on the interior of the flame liner 134. The flame retaining ring 142 causes combustion gases to recirculate within the elongated tubular flame liner 134 to better hold the flame front. A plurality of strategically placed holes 143 of different diameters are formed within the tubular flame liner 134. A space is provided between the inner wall of the combustor casing 136 and the flame liner 134. The diverter 124 operates to direct the air into the space between the inner wall of the combustor casing 136 and the flame liner 134. The air passes through the space and, due to the size variations of the holes 143 formed in the tubular flame liner 134, allows the air to enter the interior space of the combustor 28 in a controlled way. The larger primary holes are the primary holes where most of the incoming fuel is burned. The smaller secondary and tertiary holes allow for complete burn of any fuel not previously burned.

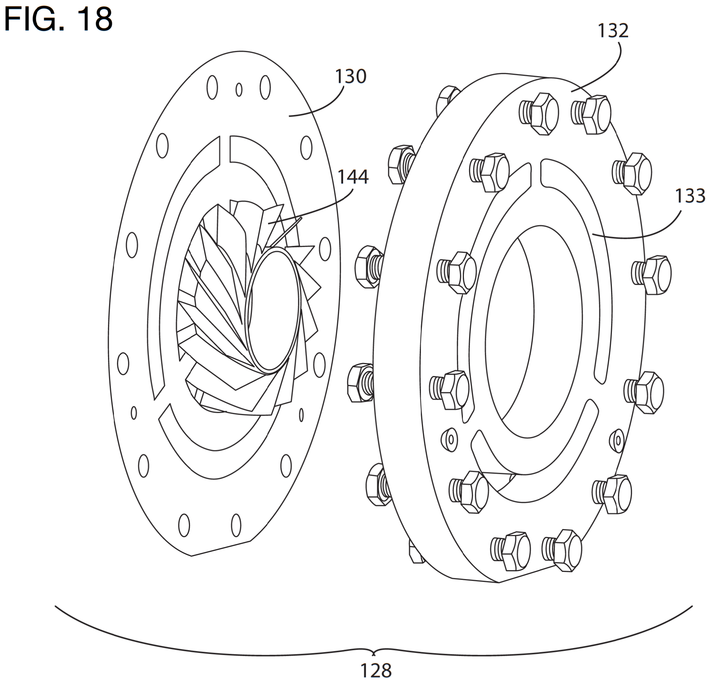

As illustrated particularly in FIG. 18, the swirler 130 includes fixed and centrally located swirler blades 144. The number, length, and pitch of the swirler blades 144 may be adjusted prior to assembly to achieve optimum swirling effect.

The blades 144 of the swirler 130 cause the incoming air to swirl as it passes into and through the concentric ring 133. The swirling effect creates turbulence in the air thereby increasing fuel-air mixing prior to the mixture being burned.

The required fuel to operate the portable turbine heat assembly 10 is delivered to the combustor 28. If the fuel is propane, then it is already in gaseous form upon delivery to the combustor 28. If the fuel is diesel, it is heated prior to delivery to the combustor 28. In the case of propane, the spark plug 138 ignites the fuel. In the case of diesel, the glow plug 111 conventionally provides heat to ensure proper ignition of the fuel in cold conditions. According to the diesel fuel-operated version of the disclosed portable heater, combustion is not sustained by heated compressed air. Instead, the power to the glow plug 111 is turned off when the portable turbine heater assembly 10 enters its standard running mode. Diesel fuel is constantly being added to the combustor 28 to maintain operation. In this way the portable turbine heater assembly 10 differs from the conventional piston diesel engine.

The air heated in the combustor 28 is forced out of the combustor 28, into and through the turbine 26, then flows into the catalytic converter 34 where the harmful CO and VOC byproducts of the combustion process are converted into CO2, whereby the outgoing heated air readily meets relevant OSHA and NIOASH standards. The purified air exits the catalytic converter 34 through its exhaust end and is forced through and out of the ejector 44.

One skilled in the art will readily recognize from such discussion, and from the accompanying drawings and claims that various changes, modifications and variations can be made therein without departing from the invention as defined by the following claims.

## Claims

1. A turbine heater comprising:
a fresh air inlet assembly;
a compressor to which the at least one fresh air inlet is attached, the compressor comprising an outlet;
a combustor to which the compressor outlet is attached, the combustor comprising an inlet end and an outlet end, the inlet end comprising a fuel nozzle, the combustor comprising a swirling unit, the swirling unit comprising a swirler having a center, the center surrounded by a plurality of swirler blades, the swirling unit further comprising an adjacent fuel nozzle housing;
a turbine;
a hot air pipe attaching the combustor to the turbine;
a catalytic converter fitted to the hot air pipe; and
an ejector fitted to the catalytic converter.

2. The turbine heater of Claim 1, wherein the swirling unit further includes an adjacent nozzle housing.

3. The turbine heater of Claim 1 or 2, wherein the swirler is a primary swirler and wherein the swirling unit further comprises a secondary swirler, the secondary swirler having a center, the center of the secondary swirler surrounded by a plurality of swirler blades, the nozzle housing being disposed between the primary swirler and the secondary swirler and/or wherein the nozzle includes a fuel inlet.

4. The turbine heater of any preceding Claims wherein the nozzle further includes a bypass airflow path.

5. The turbine heater of any preceding Claim wherein the fresh air inlet assembly comprises a first path, a second path, and a cold air transfer pipe, and optionally the first and second paths are separate and converge in the cold air transfer pipe.

6. The turbine heater of Claim 5, wherein the first path is an offset path and/or wherein the second path is a straight-through primary path.

7. The turbine heater of Claim 6, wherein one of the two paths includes a starter fan for initiating air flow into the heater and/or wherein the other of the two paths includes a generator;
optionally wherein at least one of the paths includes a throttle body to regulate the in-flow of air.

8. The turbine heater of any preceding Claim, further comprising a programmed controller to regulate operation of the heater.

9. The turbine heater of any preceding Claim, wherein the combustor comprises an internal flame liner.

10. The turbine heater of Claim 9, wherein the inner line comprises a plurality of fuel-passing holes.

11. The turbine heater of Claim 10, wherein the fuel-passing holes are of different sizes.

12. A turbine heater comprising:
a fresh air inlet assembly;
a compressor to which the at least one fresh air inlet is attached, the compressor comprising an outlet;
a combustor to which the compressor outlet is attached, the combustor comprising an inlet end and an outlet end, the inlet end comprising a fuel nozzle, the combustor comprising a swirling unit;
a turbine;
a hot air pipe attaching the combustor to the turbine;
a catalytic converter fitted to the hot air pipe; and
an ejector fitted to the catalytic converter.

13. The turbine heater of Claim 12, wherein the fresh air inlet assembly comprises a first path, a second path, and a cold air transfer pipe, the first and second paths being separate and/or converging in the cold air transfer pipe and wherein one of the two paths comprises a starter fan for initiating air flow into the heater and/or the other of the two paths includes a generator.

14. The turbine heater of Claim 12 or 13, wherein the swirling unit comprising a swirler having a center, the center surrounded by a plurality of swirler blades, the swirling unit further comprising an adjacent fuel nozzle housing.

15. The turbine heater of any of Claims 12 to 14, wherein the swirler is a primary swirler and wherein the swirling unit further comprises a secondary swirler, the secondary swirler having a center, the center of the secondary swirler surrounded by a plurality of swirler blades, the nozzle housing being disposed between the primary swirler and the secondary swirler.
